(19) **Europäisches Patentamt / European Patent Office / Office européen des brevets**

(11) **EP 2 555 511 B1**

(12) # EUROPEAN PATENT SPECIFICATION

(45) Date of publication and mention of the grant of the patent:
**25.09.2019 Bulletin 2019/39**

(21) Application number: **11763084.8**

(22) Date of filing: **01.04.2011**

(51) Int Cl.:
**H04N 21/254** (2011.01)     **H04N 21/266** (2011.01)
**H04N 21/4623** (2011.01)     **H04N 21/4627** (2011.01)
**H04N 21/6377** (2011.01)     **H04N 7/167** (2011.01)
**H04L 29/06** (2006.01)     **H04L 9/06** (2006.01)
**H04L 9/08** (2006.01)

(86) International application number:
**PCT/KR2011/002290**

(87) International publication number:
**WO 2011/122912 (06.10.2011 Gazette 2011/40)**

(54) **METHOD AND SYSTEM FOR MANAGING AN ENCRYPTION KEY FOR A BROADCASTING SERVICE**

VERFAHREN UND SYSTEM ZUR VERWALTUNG EINES VERSCHLÜSSELUNGSSCHLÜSSELS FÜR EINEN RUNDFUNKDIENST

PROCÉDÉ ET SYSTÈME DE GESTION D'UNE CLÉ DE CHIFFREMENT POUR UN SERVICE DE DIFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2010 KR 20100058744**
**02.04.2010 KR 20100030632**

(43) Date of publication of application:
**06.02.2013 Bulletin 2013/06**

(73) Proprietor: **Samsung Electronics Co., Ltd.**
**Gyeonggi-do 443-742 (KR)**

(72) Inventors:
• **HWANG, Sung-oh**
  **Yongin-si**
  **Gyeonggi-do 448-712 (KR)**
• **SELEZNEV, Sergey Nikolayevich**
  **Suwon-si**
  **Gyeonggi-do 443-727 (KR)**

(74) Representative: **HGF Limited**
**Saviour House**
**9 St. Saviourgate**
**York YO1 8NQ (GB)**

(56) References cited:
**KR-A- 20050 114 187     KR-A- 20090 106 361**
**KR-A- 20090 128 862     KR-A- 20090 128 862**
**US-A1- 2007 265 970     US-A1- 2009 252 324**

• **"DRM Specification ; OMA-TS-DRM_DRM-V2_1-20080704-D-cb", OMA-TS-DRM_DRM-V2_1-20080704-D-CB, OPEN MOBILE ALLIANCE (OMA), 4330 LA JOLLA VILLAGE DR., SUITE 110 SAN DIEGO, CA 92122 ; USA, no. 2.1, 4 July 2008 (2008-07-04), pages 1-224, XP064124446, [retrieved on 2008-07-04]**

Remarks:
The file contains technical information submitted after the application was filed and not included in this specification

**Description**

Technical Field

The present invention relates to a broadcasting service, and more particularly, to a method of managing a key used for encryption of a broadcasting service where a plurality of users exists.

Background Art

Recently, a mobile communication system has been developed to provide various multimedia services to users. Accordingly, there is lively discussion on a broadcast service and a multicast service to provide various contents to users. Hereinafter, the broadcast and multicast service may be referred to as a 'broadcasting service'.

The broadcasting service refers to a point-to-multipoint service in which multimedia data such as image data or video data is transmitted from a single source object to a plurality of receivers in a service area through use of a uni-directional bearer service. The broadcasting service may support a broadcast mode and a multicast mode. In the broadcast mode, data may be broadcasted to all users in a corresponding service area. Conversely, for the multicast service, a user may need to subscribe to a predetermined broadcasting service or a predetermined broadcasting service group where a service provider (SP) exists.

However, data of the broadcasting service may be encrypted and transmitted so that the data may be transferred to users who subscribe to the broadcasting service and thus, the data that is encrypted and transmitted may need to be decrypted by the user. Therefore, an encryption key used when the SP encrypts the data may need to be shared with the user.

An encryption key used in a current open mobile alliance (OMA) digital rights management (DRM) system may be a single encryption key, which is called as a content encryption key (CEK), and when the encryption key is used in the broadcasting service, the encryption key may need to be one-to-one transmitted to users of the broadcasting service. Since the method performs one-to-one management on a CEK between a system and a terminal and thus, the method may not flexibly manage an encryption key in a broadcasting service which a plurality of users subscribe to and withdraw from during a service time. That is, an encryption key that is used every time that a user requests a service and withdraws from the service may be continuously updated. In this process, overload on a bidirectional network may occur. Therefore, it is importable to use a method that effectively transfers a key required for decrypting content by effectively utilizing a one-to-one bidirectional channel and a broadcasting channel.

KR 2009 0128862 A describes an encryption key distribution method for a mobile broadcasting system, including a traffic encryption key distribution scheme in an Open Mobile Alliance Broadcast service system in which content is encrypted using encryption keys derived from key seed pairs generated by a rights issuer.

Open Mobile Alliance DRM Specification OMA-TS-DRM-DRM-V2_1-20080704-D defines the mechanisms and protocols for the operation of a DRM-based content distribution system.

US 2009/252324 A1 describes a method and apparatus for providing a broadcast service in a communication system.

Detailed Description of the Invention

Technical Problem

Therefore, the present invention has been made in view of the above-mentioned problems, and an aspect of the present invention is to provide a method and a system that manages an encryption key for a broadcasting service that supports a point-to-multipoint service.

Technical Solution

In accordance with an aspect of the present invention, there is provided a method for a Rights Issuer, RI, to manage an encryption key to selectively provide content to a Digital Rights Management, DRM, agent in a broadcasting service that transmits the content to a plurality of DRM agents, the method comprising: receiving, from the DRM agent, a message requesting a rights object for receiving the content, the content having at least one section; generating a Key Seed Pair, KSP, including a first key and a second key; applying hash chains of different directions to the first key and the second key, respectively, to generate at least one encryption key associated with each of the at least one section; transmitting, to the DRM agent, a response message including a context element including an identifier of the content and a key information element providing information for decrypting the content, wherein the key information element includes a first encryption key element including information specifying an algorithm for generating the at least one encryption key, a rights encryption key information element including information associated with a reference of a rights encryption key used to secure a portion of the rights object, the reference of the rights encryption key including information on a location that provides information on a method for retrieving the rights encryption key, and a cipher data element including an encrypted seed, wherein the encrypted seed includes at least one of the KSP, an authentication seed and seed type information indicating whether the encrypted seed includes the KSP or includes the KSP and the authentication seed, wherein the authentication seed is used to authenticate the DRM agent.

An exemplary embodiment of the present invention provides a method for an RI to manage an encryption key so as to selectively provide content to an allowed DRM in a broadcasting service that simultaneously transmits the content to a plurality of DRM agents, the method including: receiving, from the DRM agent, a message requesting a rights object required for receiving content divided into at least one section; generating a pair of seed keys including a first key and a second key, and applying hash chains of different directions to the first key and the second key so as to generate at least one encryption key associated with each of the at least one section; and transmitting, to the DRM agent, a response message including a context element including information associated with a rights object corresponding to the content and a multicast configuration data element including information associated with an encryption key of the content transmitted by a multicast, through use of a rights encryption language.

In accordance with another aspect of the present invention, there is provided a method for a Digital Rights Management, DRM, agent to manage an encryption key provided from a Rights Issuer, RI, to use encrypted content in a broadcasting service that transmits content to a plurality of DRM agents, the method comprising: transmitting, to the RI, a message requesting a rights object for receiving the content, the content having at least one section; receiving, from the RI, a response message including a context element including an identifier of the content and a key information element including encryption key information for decrypting the content; determining the identifier of the content from the context element; determining, from the key information element, a first encryption key element including information for generating the encryption key, a rights encryption key information element including information associated with a reference of a rights encryption key used to secure a portion of the rights object, the reference of the rights encryption key including information on a location that provides information on a method for retrieving the rights encryption key, and a cipher data element including an encrypted seed; wherein the encrypted seed includes at least one of the KSP, an authentication seed and seed type information indicating whether the encrypted seed includes the KSP or includes the KSP and the authentication seed, wherein the authentication seed is used to authenticate the DRM agent, determining, from the key information element, the KSP including a first key and a second key, which are different from each other; applying hash chains of different directions to the first key and the second key, respectively, to decrypt at least one encryption key associated with each of the at least one section; and determining, from the seed type information, whether the encrypted seed includes the KSP or includes the KSP and the authentication seed.

An exemplary embodiment of the present invention provides a method for a DRM agent to manage an encryption key provided from an RI, so as to use encrypted content in a broadcasting service that simultaneously transmits the content to a plurality of DRM agents, the method including: transmitting, to the RI, a message requesting a rights object so as to receive content divided into at least one section; receiving, from the RI, a response message including a context element including information associated with a rights object corresponding to the content and a multicast configuration data element including information associated with an encryption key of the content transmitted by a multicast, through use of a rights encryption language; determining an identifier of the content from the context element, and determining information associated with the encryption key of the content transmitted by the multicast from the multicast configuration data element; determining a pair of seed keys included in the multicast configuration data element, the pair of seed keys including a first key and a second key, which are different from each other; and applying hash chains of different directions to the first key and the second key, so as to decrypt at least one encryption key associated with each of the at least one section.

Advantageous Effects

According to a method of managing an encryption key of a broadcasting service, there may be provided an effective encryption key managing method that may protect a content stream of broadcasting service data.

Brief Description of the Drawings

FIG. 1 is a signal flow diagram illustrating an encryption key managing method of a broadcasting service according to an embodiment of the present invention;
FIG. 2 is a diagram illustrating a key layer applied to an encryption key managing method of a broadcasting service according to an embodiment of the present invention;

FIG. 3 is a diagram illustrating a data configuration of a response message used for an encryption key managing method of a broadcasting service according to an embodiment of the present invention;

FIG. 4 is a diagram illustrating an encrypted seed provided in a binary data structure used for an encryption key managing method of a broadcasting service according to an embodiment of the present invention;

FIG. 5 is a diagram illustrating an encrypted seed encoded by XML elements, the encrypted seed being provided in the binary data structure of FIG. 4;

FIG. 6 is a diagram illustrating an encryption key (Encryptedkey) element of FIG. 5;

FIG. 7 is a diagram illustrating a multicast configuration data (MulticastConfData) of FIG. 5;

FIG. 8 is a diagram illustrating a multicast configuration data (MulticastConfData) element included in a cipher data (Cipherdata) element of FIG. 3;

FIG. 9 is a diagram illustrating a multicast configuration data (MulticastConfData) element included in FIG. 8;

FIG. 10 is a diagram illustrating an element associated with a number of TEKs of FIG. 9;

FIG. 11 is a diagram illustrating a data configuration of a response message used in an encryption key managing method of a broadcasting service according to an embodiment of the present invention;

FIG. 12 is a diagram illustrating a multicast configuration data (MulticastConfData) element included in FIG. 11;

FIG. 13 is a diagram illustrating an example of a signaling used in an encryption key managing method of a broadcasting service according to an embodiment of the present invention;

FIG. 14 is a diagram illustrating another example of a signaling used in an encryption key managing method of a broadcasting service according to an embodiment of the present invention;

FIG. 15 is a diagram illustrating another example of a signaling used in an encryption key managing method of a broadcasting service according to an embodiment of the present invention;

FIG. 16 is a block diagram illustrating a configuration of a rights issuer (RI) according to an embodiment of the present invention; and

FIG. 17 is a block diagram illustrating a configuration of a DRM agent according to an embodiment of the present invention.

Mode for Carrying Out the Invention

Hereinafter, exemplary embodiments of the present invention will be described with reference to the accompanying drawings. In the following description of the present invention, a detailed description of known functions and configurations incorporated herein will be omitted when it may make the subject matter of the present invention rather unclear. Also, the terminologies used in the description may be defined based on corresponding functions in the present invention, which will be changed based on the intention of an operator, practices, and the like.

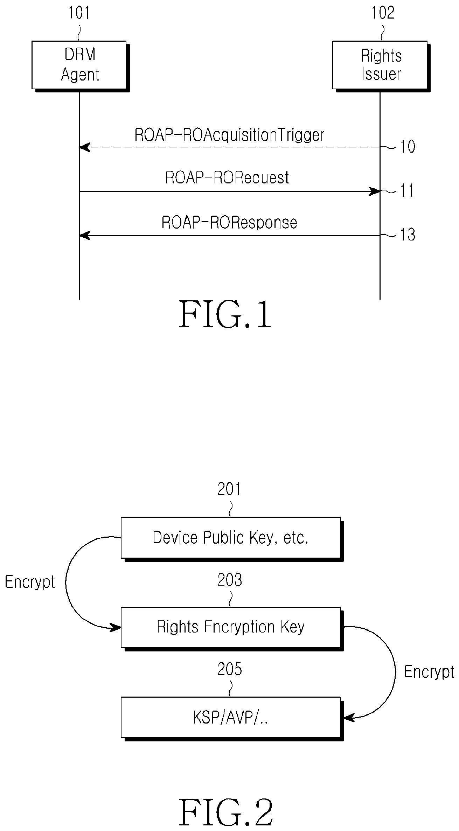

FIG. 1 is a signal flow diagram illustrating an encryption key managing method of a broadcasting service according to an embodiment of the present invention. Referring to FIG. 1, the encryption key managing method of the broadcasting service may be performed by a DRM agent 101 and a rights issuer (RI) 102.

For example, the DRM agent 101 may be included in a terminal that receives content provided through a broadcasting service. The RI 102 may be included in a server that provides content, may issue a rights object associated with content so as to selectively provide, to the allowed DRM agent 101, the content provided through the broadcasting service, and may provide the content to the DRM agent 101.

First, in step 11, the DRM agent 101 may transmit, to the RI 102, a message requesting a rights object so as to receive content divided into at least one section. The message transmitted to the RI 102 in step 301 may be an RO request (ROAP-ROrequest) message that is generated based on a rights object acquisition protocol (ROAP) defined in the open mobile alliance (OMA) digital rights management (DRM) standard.

In addition, the DRM agent 101 may voluntarily transmit the message requesting the rights object, or may transmit the message requesting the rights object in response to reception, from the RI 102 , of a trigger message indicating issuing by an RI (for example, an RO acquisition trigger (ROAP-ROAcquisitionTrigger) message generated based on the ROAP defined in the OMA DRM standard).

Subsequently, in step 13, the RI 102 may generate a response message in response to the message requesting the rights object, and transmit the response message to the DRM agent 101. The response message may be an RO response (ROAP-ROresponse) message that is generated based on the ROAP defined in the OMA DRM standard.

Hereinafter, a process of generating an encryption key included in the RO response message will be described in detail.

First, to encrypt the content transmitted to the DRM agent 101, the RI 102 may generate a pair of seed keys, which are referred to as a key seed pair (KSP). The KSP may include two keys. That is, the KSP may include KS1 and KS2. The KSP may be randomly generated by the RI 102. Subsequently, a hash chain may be applied to KS1 and KS2. That is, a forward directional hash chain may be applied to KS1, and a reverse directional hash chain may be applied to KS2.

S1 may be calculated by applying a hash function to KS1, and S2 may be calculated by applying the hash function again to S1. In the same manner, up to Sn may be calculated. The reverse hash chain may proceed in a reverse direction from the forward directional hash chain. That is, Mn may be calculated by applying the hash function to KS2, and Mn-1 may be calculated by applying the hash function to Mn. In this manner, up to M1 may be calculated by applying the hash function to M2. Through this process, n pairs of (Si, Mi) may be generated, and a pair of (Si, Mi) is defined to be a "bidirectional hash pair (BHP)" for ease of description. Subsequently, n encryption keys (traffic encryption key, hereinafter referred to as a 'TEK') may be calculated by performing predetermined operations with respect to n BHPs. In this example, an exclusive-OR operation may be used. That is, the TEK may be calculated based on operation of Equation 1.

【Equation 1】

$$TEKi = Si \ XOR \ Mi$$

In short, first, a pair of KSPs (KS1, KS2) may be generated. n pairs of BHPs (Si, Mi) may be generated through use of the KSPs. n TEKs may be generated through use of the n pairs of BHPs (Si, Mi).

In addition, when the DRM agent 101 is a DRM agent that supports pay-per-view (PPV), the KSP may not be used and there may be a slight difference. That is, the RI 102 may calculate an access valid pair (AVP) as opposed to the KSP. Subsequently, the RI 102 may transmit the AVP to the DRM agent 101 that supports the PPV. The AVP may refer to a pair of (Si, Mj) information corresponding to a predetermined time period where a broadcasting service is provided to the PPV terminal. The DRM agent 101 that supports the PPV may apply a forward directional hash chain to the Si so as to obtain values up to Sj, and may apply a reverse directional hash chain to the Mj so as to obtain values up to Mi. That is, the DRM agent 101 that supports the PPV may generate m pairs of BHPs from the AVP. In this example, when a number of BHPs generated from the DRM agent 101 is m, m=j-i+1. Accordingly, the DRM agent 101 that supports the PPV may calculate m TEKs through use of the m BHPs.

Therefore, RI 102 may transmit KSP = (KS1, KS2) or AVP = (Si, Mj) to the DRM agent 101. Although both have different names, they are substantially the same in that they are information associated with data encryption during a time period of a broadcasting service provided to the DRM agent 101. That is, when information associated with data encryption at a starting point of a reference period of the broadcasting service is KS1, and information associated with data encryption at an ending point is KS2, Si may indicate information associated with data encryption at a starting point in a time period included in the reference period and Mj may indicate information associated with data encryption at an ending point in the time period. For example, when a user is able to purchase a monthly pass for the broadcasting service, the DRM agent 101 of the user who purchases the monthly pass may be regarded as a subscriber DRM agent 101. In this example, the KSP transmitted from the DRM agent 101, that is, (KS1, KS2), may indicate information associated with data encryption at a starting point and an ending point of a corresponding month. When the user purchases a pass for one episode of a soap opera, the AVP transmitted to the DRM agent 101 of the user, that is, (Si, Mj), may indicate information associated with data encryption at a starting point and an ending point of the soap opera.

In the descriptions provided in the foregoing, a "pair" of KSP information is used. However, a single piece of information, that is, one of KS1 and KS2, may be used for a subscriber terminal. Since two pieces of information are not used, the used information may not need to be distinguished by a subscript, and may be referred to as KS. The KS may be information associated with data encryption at a starting point or an ending point of a subscription period. That is, when a reverse directional hash chain is determined to be applied to the KS, the KS may indicate information associated with data encryption at an ending point of a broadcasting service. When a forward directional hash chain is determined to be applied to the KS, the KS may indicate information associated with data encryption at a starting point of the broadcasting service.

FIG. 2 is a diagram illustrating a key layer applied to an encryption key managing method of a broadcasting service according to an embodiment of the present invention. Referring to FIG. 2, a key layer applied to a DRM system may include a device public key 201, a rights encryption key (REK) 203, and a key seed pair (KSP)/access valid pair (AVP) 205. A sensitive portion of a rights object may be secured by the REK. As defined in the OMA DRM, the REK 203 is encrypted based on a device public key or a domain key and thus, the rights object may be accessed by a predetermined device or a predetermined device group. The KSP or AVP 205 defined in the embodiments of the present invention may be encrypted by the REK in the same manner as defined in a content encryption key (CEK).

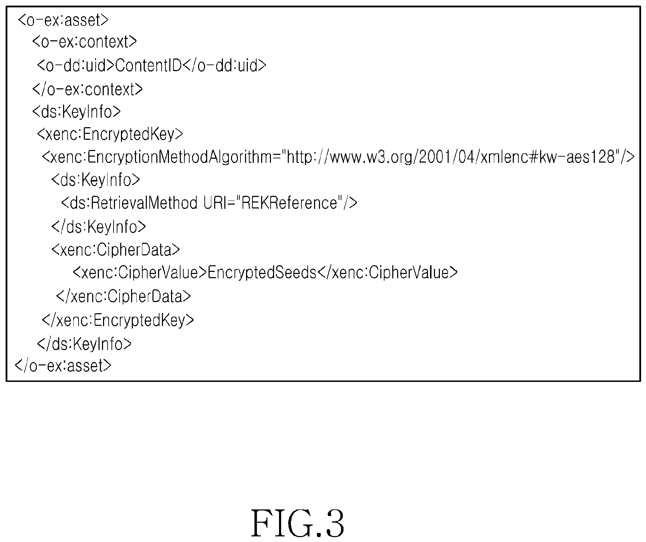

In addition, FIG. 3 is a diagram illustrating a data configuration of an RO response message transmitted in step 13 of FIG. 1. Referring to FIG. 2, the RO response message may include a context element including an identifier (ContentID) of content, and a key information (KeyInfo) element.

The key information (KeyInfo) element may include a first encryption key (EncryptedKey) element including information associated with the encryption key, an REK information (KeyInfo) element including information associated with an REK, and a cipher data element including information associated with an encrypted seed (EncryptedSeeds).

The first encryption key (EncryptedKey) element may include information defining an algorithm (Encryption-Method Algorithm) that generates an encryption key. An embodiment of the present invention shows that the information defining the algorithm (EncryptionMethod Algorithm) that generates the encryption key is defined in "http://www.w3.org/2001/04/xmlenc#kw-aes128".

The REK information (KeyInfo) element may include URI (RetrievalMethod URI) information that provides a method of retrieving a REK. An embodiment of the present invention shows that the URI (RetrievalMethod URI) information that provides a method of retrieving the REK is defined in an REK reference (REKReference).

The encrypted seed (EncryptedSeeds) included in the cipher data (CipherData) element may include the pair of seed keys, or may include the pair of seed keys and an authentication seed associated with the DRM agent.

In addition, the cipher data (CipherData) element may additionally include a KSP reference (KSP ID) or an AVP reference (AVP ID), a seed type, a TEK reference, and a number of TEKs.

The KSP reference (KSP ID) and the AVP reference (AVP ID) may be identifiers of the KSP and the AVP, respectively. Although they are provided in different forms, they may be used for identifying a pair of seeds based on a unique scheme.

The seed type may indicate whether a parameter corresponds to a seed for an encryption key or corresponds to a seed for an encryption key and an authentication key.

The TEK reference may be an identifier to indicate a first TEK used for encrypting content. The TEK reference may be also used for coupling an encrypted portion of a stream and the TEK (for example, the identifier may be included in the encrypted stream).

The number of TEKs may be generated from seed values.

Although the KSP reference (KSP ID) or the AVP reference (AVP ID), the seed type, the TEK reference, and the number of TEKs included in the cipher data (CipherData) element may be transmitted in the same data structure as the encrypted seed (EncryptedSeeds), they may be transmitted through use of a general RO payload.

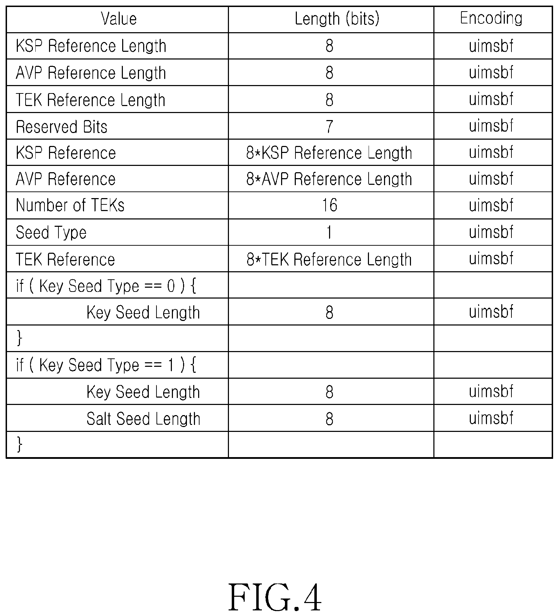

In addition, the encrypted seed (EncryptedSeeds) may be formed in a binary data structure as shown in FIG. 4, and may include reference lengths of a KSP, an AVP, and a TEK which are used as an encryption key, a KSP reference, an AVP reference, a TEK reference, a number of TEKs, seed type information indicating whether the encrypted seed includes the pair of seed keys, or includes the pair of seed keys and the authentication seed associated with the DRM agent, a length of the pair of seed keys, and a length of the authentication seed.

The KSP reference length may define a KSP reference length.

The AVP reference length may define an AVP reference length.

The TEK reference length may define a TEK reference length.

Reserved bits refer to bits reserved for a further purpose.

The KSP reference may define a KSP reference.

The AVP reference may define an AVP reference.

The number of TEKs may define a number of TEKs generated from the AVP.

The seed type may indicate whether the encrypted seed includes a pair of seed keys for an encryption key or includes a pair of seed keys for an encryption key and an authentication seed for an authentication key. When the seed type is set to '0', the seed type may indicate that the pair of seed keys may be provided. When the seed key is set to '1', the seed type may indicate that the pair of seed keys and the authentication seed may be provided.

The TEK reference may define a TEK reference.

The key seed length may define a length of the pair of seed keys.

A salt seed length may define a length of the authentication seed.

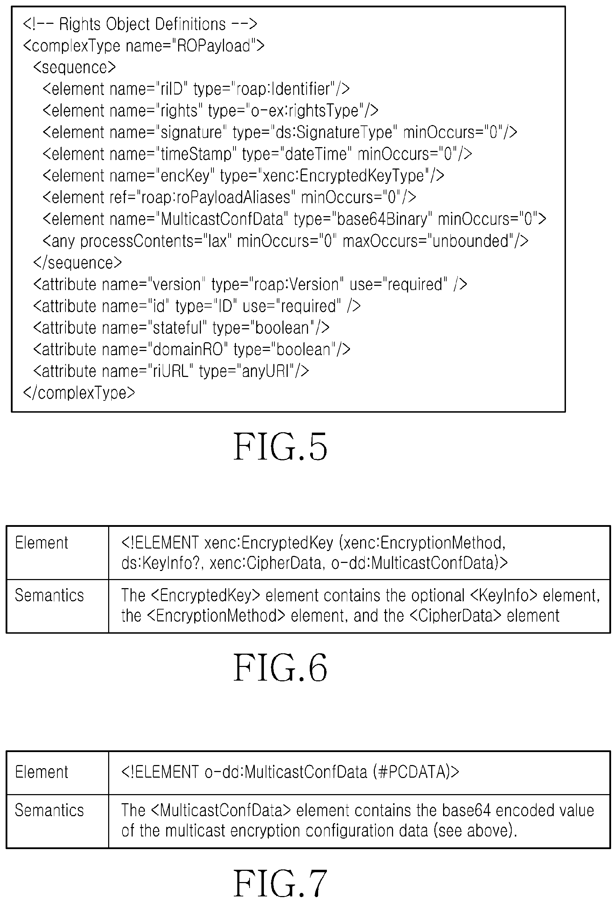

The encrypted seed (EncryptedSeeds) formed in the binary data structure may be encoded by an XML element, and may be transmitted. That is, as shown in FIG. 5, the encrypted seed (EncryptedSeeds) may be encoded by the XML element, and may be incorporated into a rights object payload type defined in the DRM TS. The encrypted seed (EncryptedSeeds) may include an RI identifier (riID) including an identifier of an RI, a rights element including information associated with a right, a signature element including information associated with a signature, a time stamp element, a second encryption key (encKey) element including information associated with the encryption key, and a multicast configuration data (MulticastConfData) element including configuration information associated with encryption of a multicast.

In addition, the encrypted seed (EncryptedSeeds) encoded by the XML element may be incorporated into a rights element, as a lower element of the key information (KeyInfo) element or the first encryption key (EncryptedKey) element as defined in the rights expression language (DRM REL). For example, the second encryption key (encKey) element may include information associated with an encryption key as shown in FIG. 6, and may include REK information (KeyInfo) element including information associated with an REK reference, an encryption method (EncryptionMethod) element including information that defines a method of generating an encryption key, and a cipher data (CipherData) element including a KSP reference (KSP ID) or an AVP reference (AVP ID), a seed type, a TEK reference, and a number of TEKs. Also, the multicast configuration data (MulticastConfData) element may include a value encoded by base64 of multicast encryption configuration data as shown in FIG. 7.

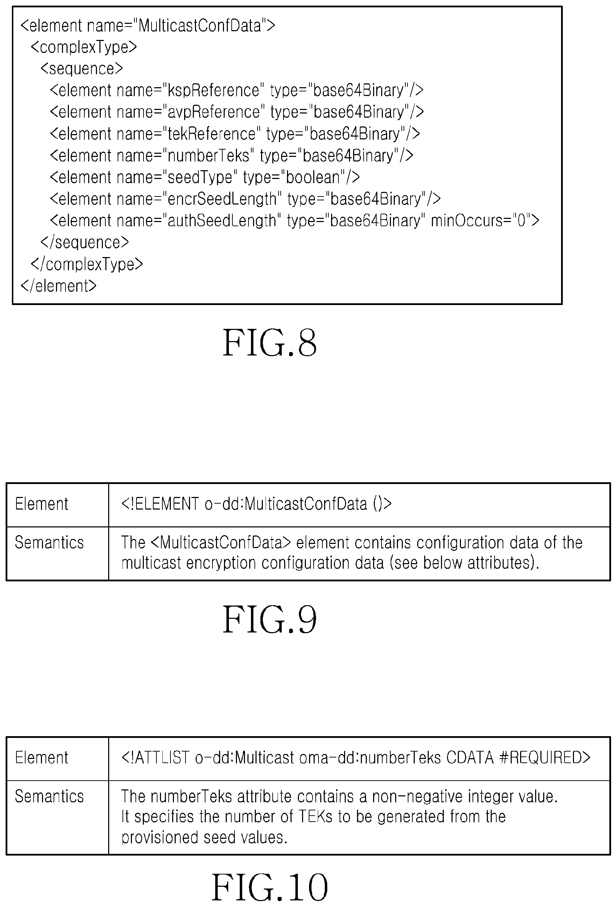

Although it is described that the cipher data (CipherData) element may include the encrypted seed (EncryptedSeeds), and the encrypted seed (EncryptedSeeds) is formed in the binary data structure as shown in FIG. 4, embodiments of the present invention may not be limited thereto. Alternatively, for example, the cipher data (CipherData) element may include a multicast configuration data (MulticastConfData) element formed of XML elements as shown in FIG. 8, instead of the encrypted seed (EncryptedSeeds).

The multicast configuration data (MulticastConfData) element of FIG. 8 may include a KSP reference (kspReference), an AVP reference (avpReference), a TEK reference, (tekReference), a number of TEKs (numberTeks), seed type information (seedType) indicating whether the encrypted seed includes the pair of seed keys or includes the pair of seed keys and an authentication seed associated with the DRM agent, a length of the pair of seed keys (encrSeedLength), and a length of the authentication seed (authSeedLength).

The multicast configuration data (MulticastConfData) element may be defined in a rights element, like the encrypted seed (EncryptedSeeds) encoded by the XML element, and may be formed as shown in FIG. 9.

Also, the number of TEKs (numberTeks) may be defined as shown in FIG. 10. Particularly, the number of TEKs (numberTeks) may be a value that is different from a negative integer, and may be generated by a value of a provided seed.

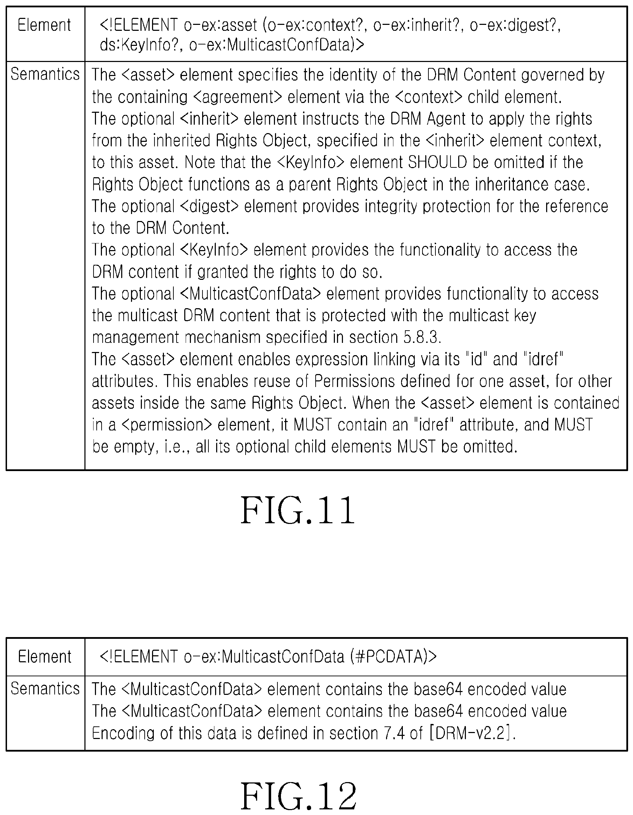

FIG. 11 is a diagram illustrating a data configuration of an RO response message transmitted in step 13 of FIG. 1.

Referring to FIG. 11, unlike FIG. 3, the data of the RO response message may be configured through use of a right encryption language (REL) used to express a rights object in the OMA DRM.

As another example, the data configuration of the RO response message may include a context element, an inherit element, and the like, as an content element identifying a rights object associated with content, and may include a multicast configuration data (MulticastconfData) element including information associated with an encryption key of content transmitted by a multicast.

In addition, the multicast configuration data (MulticastconfData) element may be formed as shown in FIG. 12, and the multicast configuration data (MulticastconfData) element may include a value obtained by encoding, based on a base64 scheme, configuration data that generates and uses TEKs. The multicast configuration data (MulticastconfData) element may be formed in the binary data structure, and may include reference lengths of a KSP, an AVP, and a TEK which are used as encryption keys, a KSP reference, an AVP reference, a TEK reference, a number of TEKs, seed type information indicating whether the encrypted seed includes the pair of seed keys or includes the pair of seed keys and an authentication seed associated with the DRM agent, a length of the pair of seed keys, and a length of the authentication seed. For example, the multicast configuration data (MulticastconfData) element may be configured as shown in FIG. 4.

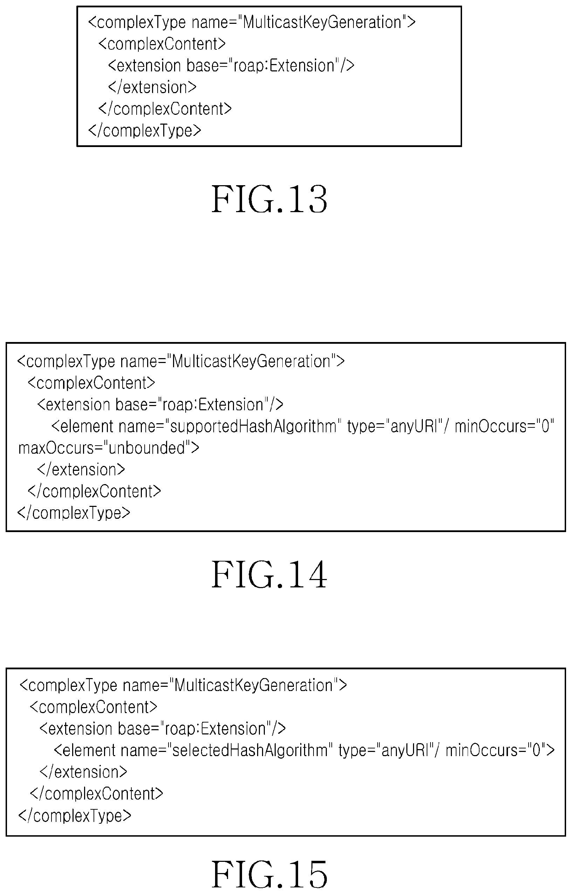

In addition, when the provided key generating method is compulsory for supporting DRM 2.2, supporting of the algorithm may be signaled by a version of a specification. Conversely, supporting may be determined through use of the extension of a Device Hello message and an RI Hello message. FIG. 13 is a diagram illustrating an example of a signaling used in an encryption key managing method of a broadcasting service according to an embodiment of the present invention, and shows a signaling indicating whether the key generating method is used through use of a version of a specification. That is, presence information of a multicast key generation (MulticastKeyGeneration) element included in an extension field of the Device Hello and RI Hello message may be used to indicate whether the key generating method is supported.

FIG. 14 is a diagram illustrating another example of a signaling used in an encryption key managing method of a broadcasting service according to an embodiment of the present invention, and shows a signaling indicating whether the key generating method is used through use of the Device Hello and the RI Hello message. In FIG. 14, the multicast key generation (MulticastKeyGeneration) element in the Device Hello message may include an identifier of a hash function to be used for generating a key. In this example, the RI Hello message may be provided as shown in FIG. 15.

The DRM agent 101 may determine information required for generating an encryption key from an RO response message received in step 13 (referring to FIG. 3), and may generate an encryption key for using content provided through the broadcasting service.

When the RO response message of FIG. 3 is received, the DRM agent 101 may determine an identifier of the content from the content element, and may determine, from the key information element, a first encryption key element including information associated with the encryption key, a REK information element including information associated with an REK reference, and a cipher data element including an encrypted seed. Also, the DRM agent 101 may determine, from the key information element, a pair of seed keys included in the encryption key, the pair of seed keys including a first key and a second key, which are different from each other. In this example, when the DRM agent 101 corresponds to a subscriber DRM agent 101, a KSP may be determined, and when the DRM agent 101 corresponds to a DRM agent 101 that supports the PPV, an AVP may be determined.

In a process of determining the pair of seed keys, an authentication seed for authenticating the DRM agent 101 may be further determined. That is, the DRM agent 101 may further determine the authentication seed associated with the DRM agent in addition to the pair of seed keys, from the encrypted seed included in the cipher data element.

In addition, the pair of seed keys may be included, as a binary data structure, in the encrypted seed that is included in the cipher data (CipherData) element as shown in FIG. 4, and may be received. Therefore, the DRM agent 101 may determine, from information included in the encrypted seed as a binary data structure, reference lengths of a KSP, an AVP, and a TEK which are used as an encryption key, a KSP reference, an AVP reference, a TEK reference, a number of TEKs, seed type information indicating whether the encrypted seed includes the pair of seed keys or includes the pair of seed keys and the authentication seed associated with the DRM agent, a length of the pair of seed keys, a length of the authentication seed, and the like, so as to determine the pair of seed keys.

The encrypted seed included in the cipher data (CipherData) element may be encoded by an XML element and may be received as shown in FIG. 5. In this example, to determine the pair of seed keys, the DRM agent 101 may determine an RI identifier (riID) element including an identifier of a RI, a rights element including information associated with a right, a signature element including information associated with a signature, a time stamp element, a second encryption key (encKey) element including information associated with the encryption key, a multicast configuration data (MulticastConfData) element including configuration information of encryption of a multicast, and the like, so as to determine the encrypted seed (EncryptedSeeds). Also, the pair of seed keys may be determined through use of the information included in the encrypted seed (EncryptedSeeds).

Also, the DRM agent 101 may receive the RO response message including the cipher data (CipherData) element containing a multicast configuration data (MulticastConfData) element formed of XML elements as shown in FIG. 8, as opposed to the encrypted seed (EncryptedSeeds) . Therefore, the DRM agent 101 may determine a value contained in the multicast configuration data (MulticastConfData) element formed of XML elements included in the cipher data (CipherData) element, so as to determine the pair of seed keys. That is, the DRM agent 101 may determine a KSP reference (kspReference), an AVP reference (avpReference), and a TEK reference (tekReference), a number of TEKs, seed type information (seedType) indicating whether the encrypted seed includes the pair of seed keys or includes the pair of seed keys and an authentication seed associated with the DRM agent, a length of the pair of seed keys (encr-SeedLength), and a length of the authentication seed included in the multicast configuration data (MulticastConfData) element formed of the XML elements, so as to determined the pair of seed keys.

Also, unlike FIG. 3, the RO response message may be configured through use of an REL used for expressing a rights object in the OMA DRM, and the DRM agent 101 may receive the RO response message configured through use of the REL. In this example, the DRM agent 101 may determine a context element and an inherit element included as a content element for identifying a rights object associated with content, and the multicast configuration data (MulticastconfData) element including information associated with an encryption key of content transmitted through a multicast, so as to determine the pair of seed keys. In particular, the pair of seed keys required for generating the encryption key may be determined by determining reference lengths of a KSP, an AVP, and a TEK, a KSP reference, an AVP reference, a TEK reference, a number of TEKs, seed type information indicating whether the encrypted seed includes the pair of seed keys or includes the pair of seed keys and an authentication seed associated with the DRM agent, a length of the pair of seed keys, a length of the authentication seed, and the like included in the multicast configuration data (MulticastconfData) element formed in the binary data structure.

When the pair of seed keys is determined, the encryption key may be detected through use of the pair of seed keys. That is, the DRM agent 101 that determines the KSP may calculate BHPs by applying a forward directional hash chain and a reverse directional hash chain to KS1 and KS2, and may calculate n TEKs through use of predetermined operations with respect to the BHPs. Also, the DRM agent 101 that determines an AVP may apply a forward directional hash chain and a reverse directional hash chain to the pair of seed keys, that is, n pairs of (Si, Mi), so as to calculate S={Si, Si+1, Si+2, ... Sj-1, Sj}, M={Mj-1, Mj-2, ... , Mi+1, Mi}, and may perform an XOR operation with respect to the calculated values so as to calculate m TEKs from TEKi to TEKj.

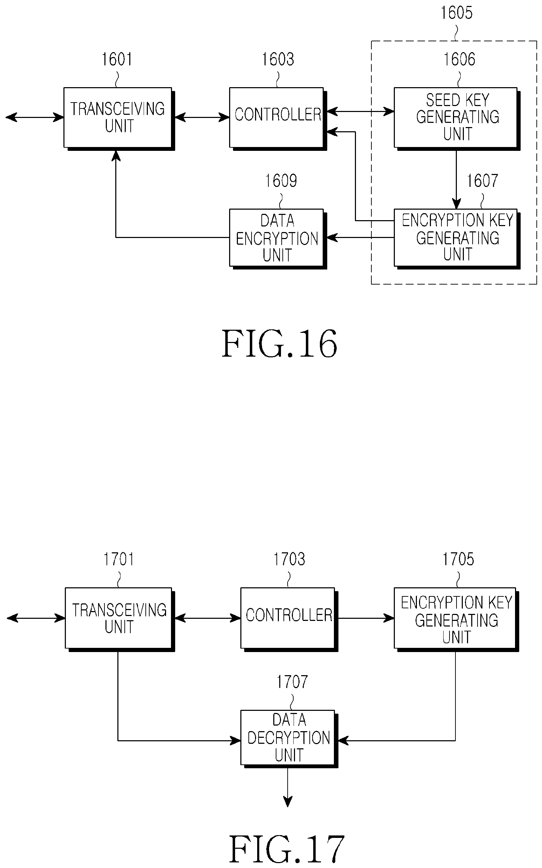

FIG. 16 is a block diagram illustrating a configuration of an RI according to an embodiment of the present invention. Referring to FIG. 16, the RI may include a transceiving unit 1601, a controller 1603, an encryption key managing unit 1605, and a data encryption unit 1609.

The transceiving unit 1601 may receive a message requesting a rights object (for example, an RO (ROAP-ROrequest) message), from a DRM agent, and may transfer the received message to the controller 1603. The controller 1603 may determine, based on information included in the received RO request message, whether the corresponding DRM agent is a subscriber DRM agent or a DRM agent that supports the PPV, and may control a seed key generating unit 1306 of the encryption key managing unit 1605 based on a result of the determination. The controller 1603 may generate a trigger message indicating issuing by the RI (for example, an RO acquisition trigger (ROAP-ROAcquisition-Trigger) message) and may transfer the trigger message to the transceiving unit 1601, and may request transmitting to the DRM agent.

The encryption key managing unit 1605 may generate a seed key appropriate for a type of the corresponding DRM agent by the controlling of the controller 1603, and may generate an encryption key, that is, a TEK, through use of the generated seed key. In particular, the encryption key managing unit 1605 may include a seed key generating unit 1306 and an encryption key generating unit 1307. The seed key generating unit 1306 may generate a seed key appropriate for a type of the corresponding DRM agent. That is, when the DRM agent is a subscriber DRM agent, a KSP may be generated. When the DRM agent is a DRM agent that supports the PPV, an AVP may be generated. The generated KSP or AVP may be transferred to the controller 1603 and the encryption key generating unit 1607.

The encryption key generating unit 1307 that receives the KSP or the AVP may generate TEKs through use of the KSP or the AVP, and a number of the generated TEKs may correspond to an expiration date of the KSP or the AVP. That is, when then DRM agent is a subscriber DRM agent, n TEKs may be generated through use of the KSP. When the DRM agent is a DRM agent that supports the PPV, m TEKs may be generated through use of the AVP. The method of generating TEKs from the KSP or the AVP may use a forward directional hash chain and a reverse directional hash chain as described in the encryption key managing method, and detailed descriptions thereof will be omitted. The TEKs may be transferred from the encryption key generating unit 1307 to the controller 1603 and the data encryption unit 1609. The data encryption unit 1609 may encrypt data through use of the TEKs, and may transmit the encrypted data to a terminal though use of the transceiving unit 1601.

In addition, the controller 1603 may generate a response message including a KSP or an AVP, and a TEK provided from the encryption key managing unit 1605, and may transmit the generated response message to the DRM agent through use of the transceiving unit 1601. Here, the controller 1603 may generate the response message based on the encryption key managing method and thus, the detailed process thereof may be understood based on the response message generating process of the encryption key managing method according to an embodiment of the present invention.

FIG. 17 is a block diagram illustrating a configuration of a DRM agent according to an embodiment of the present invention. Referring to FIG. 17, the DRM agent may include a transceiving unit 1701, a controller 1703, an encryption key generating unit 1705, and a data decryption unit 1707.

The controller 1703 may generate a message requesting a rights object of the corresponding DRM (for example, an RO request (ROAP-ROrequest) message), may transfer the message to an RI through use of a transceiving unit 1701, and may receive a pair of seed keys, that is, a response message including a KSP or an ACP, through transceiving unit 1701 in response to the RO request message. The controller 1703 may detect the KSP or the AVP included in the response message, and may transfer the KSP or the AVP to the encryption key generating unit 1705. Here, an operation in which the controller 1703 detects a seed key included in the response message may be performed based on the encryption key managing method and thus, the detailed process thereof may be understood based on the process of determining the pair of seed keys from the response message in the encryption key managing method according to an embodiment of the present invention.

The encryption key generating unit 1705 may generate TEKs through use of the received KSP or AVP, a number of the generated TEKs corresponding to an expiration date of the KSP or the AVP, and may transfer the generated TEKs to the data decryption unit 1707.

When the transceiving unit 1701 receives encrypted data from a network, the transceiving unit 1701 may transfer the encrypted data to the data decryption unit 1707. The data decryption unit 1707 may decrypt the encrypted data through use of the TEKs transferred from the encryption generating unit 1705, and may output the decrypted data.

While the invention has been shown and described with reference to certain exemplary embodiments thereof, it will be understood by those skilled in the art that various changes in form and details may be made therein without departing from the scope of the invention, as defined by the appended claims.

**Claims**

1. A method for a Rights Issuer, RI, (102) to manage an encryption key to selectively provide content to a Digital Rights Management, DRM, agent (101) in a broadcasting service that transmits the content to a plurality of DRM agents, the method comprising:

   receiving (11), from the DRM agent (101), a message requesting a rights object for receiving the content, the content having at least one section;
   generating a Key Seed Pair, KSP, including a first key and a second key;
   applying hash chains of different directions to the first key and the second key, respectively, to generate at least one encryption key associated with each of the at least one section;
   transmitting (13), to the DRM agent (101), a rights object response message including a context element including an identifier of the content and a key information element providing information for decrypting the content,
   wherein the key information element includes a first encryption key element including information specifying the algorithm for generating the at least one encryption key, a rights encryption key information element including information associated with a reference of a rights encryption key used to secure a portion of the rights object, the reference of the rights encryption key including information on a location that provides information on a method for retrieving the rights encryption key, and a cipher data element including an encrypted seed, wherein the encrypted seed includes at least one of the KSP, an authentication seed and seed type information indicating whether the encrypted seed includes the KSP or includes the KSP and the authentication seed, wherein the authentication seed is used to authenticate the DRM agent.

2. The method of claim 1, wherein the encrypted seed is included in the first encryption key element that includes the at least one encryption key.

3. The method of claim 1, wherein the encrypted seed is formed in a binary data structure, and
wherein the encrypted seed further includes reference lengths of the KSP, an Access Valid Pair, AVP, and a Traffic Encryption Key, TEK, that are used as the at least one encryption key, a KSP reference, an AVP reference, a TEK reference, a number of TEKs, a length of the KSP, and a length of the authentication seed.

4. The method of claim 1, wherein the encrypted seed is formed of eXtensible Markup Language, XML, elements, and wherein the encrypted seed further includes an RI identifier element including an identifier of the RI (102), a rights element including information associated with a right, a signature element including information associated with a signature, a time stamp element, a second encryption key element including information associated with the at least one encryption key, and a multicast configuration data element including configuration information associated with encryption of a multicast.

5. The method of claim 4, wherein the multicast configuration data element is formed of XML elements, and wherein the multicast configuration data element further includes a KSP reference, an Access Valid Pair, AVP, reference, a Traffic Encryption Key, TEK, reference, a number of TEKs, a length of the KSP, and a length of the authentication seed.

6. A method for a Digital Rights Management, DRM, agent (101) to manage an encryption key provided from a Rights Issuer, RI, (102) to use encrypted content in a broadcasting service that transmits content to a plurality of DRM agents, the method comprising:

transmitting (11), to the RI (102), a message requesting a rights object for receiving the content, the content having at least one section;
receiving (13), from the RI (102), a response message including a context element including an identifier of the content and a key information element including encryption key information for decrypting the content;
determining the identifier of the content from the context element;
determining, from the key information element,
a first encryption key element including information specifying an algorithm for generating the encryption key,
a rights encryption key information element including information associated with a reference of a rights encryption key used to secure a portion of the rights object, the reference of the rights encryption key including information on a location that provides information on a method for retrieving the rights encryption key, and
a cipher data element including an encrypted seed;
wherein the encrypted seed includes at least one of the KSP, an authentication seed and seed type information indicating whether the encrypted seed includes the KSP or includes the KSP and the authentication seed, wherein the authentication seed is used to authenticate the DRM agent,
determining, from the key information element, the KSP including a first key and a second key, which are different from each other;
applying hash chains of different directions to the first key and the second key, respectively, to decrypt at least one encryption key associated with each of the at least one section; and
determining, from the seed type information, whether the encrypted seed includes the KSP or includes the KSP and the authentication seed.

7. The method of claim 6, further comprising:
determining the authentication seed associated with the DRM agent (101) from the encrypted seed included in the cipher data element.

8. The method of claim 6, wherein determining the KSP comprises:
determining, from the encrypted seed, which is formed in a binary data structure, reference lengths of the KSP, an Access Valid Pair, AVP, and a Traffic Encryption Key, TEK, which are used as the at least one encryption key, a KSP reference, an AVP reference, a TEK reference, a number of TEKs, a length of the KSP, and a length of the authentication seed.

9. The method of claim 6, wherein determining the KSP comprises:
   determining, from the encrypted seed, which is formed of eXtensible Markup Language, XML, elements, an RI identifier element including an identifier of the RI (102), a rights element including information associated with a right, a signature element including information associated with a signature, a time stamp element, a second encryption key element including information associated with the at least one encryption key, and a multicast configuration data element including configuration information associated with encryption of a multicast.

10. The method of claim 9, wherein determining the KSP further comprises:
    determining, from the multicast configuration data element formed of the XML elements, a KSP reference, an Access Valid Pair, AVP, reference, a Traffic Encryption Key (TEK) reference, a number of TEKs, a length of the KSP, and a length of the authentication seed.

**Patentansprüche**

1. Verfahren für einen Rechtegeber, RI, (102) zum Verwalten eines Verschlüsselungsschlüssels zum selektiven Bereitstellen von Inhalt für einen digitalen Rechteverwaltungs-, DRM, Agent (101) in einem Rundfunkdienst, der den Inhalt an eine Mehrzahl von DRM-Agents überträgt, wobei das Verfahren aufweist:

   ein Empfangen (11), von dem DRM-Agent (101), einer Nachricht, die ein Rechteobjekt zum Empfangen des Inhalts anfordert, wobei der Inhalt mindestens einen Abschnitt hat;
   ein Generieren eines Schlüsselausgangswertpaars, KSP, das einen ersten Schlüssel und einen zweiten Schlüssel enthält;
   ein Anwenden von Hash-Ketten verschiedener Richtungen auf jeweils den ersten Schlüssel und den zweiten Schlüssel, um mindestens einen Verschlüsselungsschlüssel zu generieren, der jedem des mindestens einen Abschnitts zugehörig ist;
   ein Übertragen (13), an den DRM-Agent (101), einer Rechteobjekt-Antwortnachricht mit einem Kontextelement, das eine Kennung des Inhalts und ein Schlüsselinformationenelement enthält, das Informationen für ein Entschlüsseln des Inhalts bereitstellt,
   wobei das Schlüsselinformationenelement ein erstes Verschlüsselungsschlüsselelement mit Informationen enthält, die einen Algorithmus zum Generieren des mindestens einen Verschlüsselungsschlüssels, ein Rechteverschlüsselungsschlüssel-Informationenelement mit Informationen, die einer Referenz eines Rechteverschlüsselungsschlüssel zugehörig sind, der zum Schützen eines Teils des Rechteobjekts verwendet wird, wobei die Referenz des Rechteverschlüsselungsschlüssels Informationen über eine Position enthält, die Informationen über ein Verfahren zum Abrufen des Rechteverschlüsselungsschlüssels bereitstellt, und ein Chiffrierdatenelement mit einem verschlüsselten Ausgangswert angeben,
   wobei der verschlüsselte Ausgangswert mindestens eines von entweder dem KSP, einem Authentifizierungsausgangswert und Ausgangswerttypinformationen enthält, die angeben, ob der verschlüsselte Ausgangswert das KSP enthält oder das KSP und den Authentifizierungsausgangswert enthält,
   wobei der Authentifizierungsausgangswert zum Authentifizieren des DRM-Agent verwendet wird.

2. Verfahren nach Anspruch 1, wobei der verschlüsselte Ausgangswert in dem ersten Verschlüsselungsschlüsselelement enthalten ist, das den mindestens einen Verschlüsselungsschlüssel enthält.

3. Verfahren nach Anspruch 1, wobei der verschlüsselte Ausgangswert in einer binären Datenstruktur ausgebildet ist, und
   wobei der verschlüsselte Ausgangswert ferner Referenzlängen des KSP, ein Zugriffsgültigkeitspaar, AVP, und einen Datenverkehrsverschlüsselungsschlüssel, TEK, enthält, die als der mindestens eine Verschlüsselungsschlüssel, eine KSP-Referenz, eine AVP-Referenz, eine TEK-Referenz, eine Anzahl von TEKs, eine Länge des KSP und eine Länge des Authentifizierungsausgangswerts verwendet werden.

4. Verfahren nach Anspruch 1, wobei der verschlüsselte Ausgangswert aus Extensible-Markup-Language-, XML, Elementen ausgebildet ist, und
   wobei der verschlüsselte Ausgangswert ferner ein RI-Kennungselement mit einer Kennung des RI (102), ein Rechteelement mit Informationen, die einem Recht zugehörig sind, ein Signaturelement mit Informationen, die einer Signatur zugehörig sind, ein Zeitstempelelement, ein zweites Verschlüsselungsschlüsselelement mit Informationen, denen mindestens ein Verschlüsselungsschlüssel und ein Multicast-Konfigurationsdatenelement mit Konfigurationsinformationen enthält, die einer Multicast-Verschlüsselung zugehörig sind.

5. Verfahren nach Anspruch 4, wobei das Multicast-Konfigurationsdatenelement aus XML-Elementen ausgebildet ist, und
wobei das Multicast-Konfigurationsdatenelement ferner eine KSP-Referenz, eine Zugriffsgültigkeitspaar-, AVP, Referenz, eine Datenverkehrsverschlüsselungsschlüssel-, TEK, Referenz, eine Anzahl von TEKs, eine Länge des KSP und eine Länge des Authentifizierungsausgangswerts enthält.

6. Verfahren für digitalen Rechteverwaltungs-, DRM, Agent (101) zum Verwalten eines Verschlüsselungsschlüssels, der von einem Rechtegeber, RI, (102) bereitgestellt wird, um verschlüsselten Inhalt in einem Rundfunkdienst zu verwenden, der Inhalt an eine Mehrzahl von DRM-Agents überträgt, wobei das Verfahren aufweist:

ein Übertragen (11), an den RI (102), einer Nachricht, die ein Rechteobjekt zum Empfangen des Inhalts anfordert, wobei der Inhalt mindestens einen Abschnitt hat;
ein Empfangen (13), von dem RI (102), einer Antwortnachricht mit einem Kontextelement, das eine Kennung des Inhalts und ein Schlüsselinformationenelement enthält, das Verschlüsselungsschlüsselinformationen für ein Entschlüsseln des Inhalts enthält;
ein Bestimmen der Kennung des Inhalts aus dem Kontextelement;
ein Bestimmen, aus dem Schlüsselinformationenelement, eines ersten Verschlüsselungsschlüsselelements mit Informationen, die einen Algorithmus zum Generieren des Verschlüsselungsschlüssels angeben,
ein Rechteverschlüsselungsschlüssel-Informationenelement mit Informationen, die einer Referenz eines Rechteverschlüsselungsschlüssel zugehörig sind, der zum Schützen eines Teils des Rechteobjekts verwendet wird, wobei die Referenz des Rechteverschlüsselungsschlüssels Informationen über eine Position enthält, die Informationen über ein Verfahren zum Abrufen des Rechteverschlüsselungsschlüssels bereitstellt, und ein Chiffrierdatenelement mit einem verschlüsselten Ausgangswert,
wobei der verschlüsselte Ausgangswert mindestens eines von entweder dem KSP, einem Authentifizierungsausgangswert und Ausgangswerttypinformationen enthält, die angeben, ob der verschlüsselte Ausgangswert das KSP enthält oder das KSP und den Authentifizierungsausgangswert enthält,
wobei der Authentifizierungsausgangswert zum Authentifizieren des DRM-Agent verwendet wird, wobei aus dem Schlüsselinformationenelement das KSP bestimmt wird, das einen ersten Schlüssel und einen zweiten Schlüssel enthält, die sich voneinander unterscheiden;
ein Anwenden von Hash-Ketten verschiedener Richtungen auf jeweils den ersten Schlüssel und den zweiten Schlüssel, um mindestens einen Verschlüsselungsschlüssel zu entschlüsseln, der jedem des mindestens einen Abschnitts zugehörig ist; und
ein Bestimmen, aus den Ausgangswerttypinformationen, ob der verschlüsselte Ausgangswert das KSP enthält oder das KSP und den Authentifizierungsausgangswert enthält.

7. Verfahren nach Anspruch 6, ferner aufweisend:
ein Bestimmen des dem DRM-Agent (101) zugehörigen Authentifizierungsausgangswerts aus dem verschlüsselten Ausgangswert, der in dem Chiffrierdatenelement enthalten ist.

8. Verfahren nach Anspruch 6, wobei ein Bestimmen des KSP aufweist: ein Bestimmen, aus dem verschlüsselten Ausgangswert, der in einer binären Datenstruktur ausgebildet ist, von Referenzlängen des KSP, ein Zugriffsgültigkeitspaar, AVP, und einen Datenverkehrsverschlüsselungsschlüssel, TEK, die als der mindestens eine Verschlüsselungsschlüssel, eine KSP-Referenz, eine AVP-Referenz, eine TEK-Referenz, eine Anzahl von TEKs, eine Länge des KSP und eine Länge des Authentifizierungsausgangswerts verwendet werden.

9. Verfahren nach Anspruch 6, wobei ein Bestimmen des KSP aufweist: ein Bestimmen, aus dem verschlüsselten Ausgangswert, der aus Extensible-Markup-Language-, XML, Elementen ausgebildet ist, eines RI-Kennungselements mit einer Kennung des RI (102), eines Rechteelements mit Informationen, die einem Recht zugehörig sind, eines Signaturelements mit Informationen, die einer Signatur zugehörig sind, eines Zeitstempelelement, eines zweiten Verschlüsselungsschlüsselelements mit Informationen, die dem mindestens einen Verschlüsselungsschlüssel zugehörig sind, und eines Multicast-Konfigurationsdatenelements mit Konfigurationsinformationen, die einer Multicast-Verschlüsselung zugehörig sind.

**10.** Verfahren nach Anspruch 9, wobei ein Bestimmen des KSP ferner aufweist: ein Bestimmen, aus dem Multicast-Konfigurationsdatenelement, das aus den XML-Elementen ausgebildet ist, einer KSP-Referenz, einer Zugriffsgültigkeitspaar-, AVP, Referenz, einer Datenverkehrsverschlüsselungsschlüssel-, TEK, Referenz, einer Anzahl von TEKs, einer Länge des KSP und einer Länge des Authentifizierungsausgangswerts.

**Revendications**

**1.** Procédé permettant à un émetteur de droits (RI) (102) de gérer une clé de chiffrement afin de fournir sélectivement un contenu à un agent de gestion de droits numériques (DRM) (101) dans un service de diffusion qui transmet le contenu à une pluralité d'agents DRM, le procédé comprenant :

la réception (11), en provenance de l'agent DRM (101), d'un message demandant un objet de droits pour recevoir le contenu, le contenu comportant au moins une section ;
la génération d'une paire de valeurs de départ de clés (KSP) comprenant une première clé et une seconde clé ;
l'application des chaînes de hachage de directions différentes à la première clé et à la seconde clé, respectivement, pour générer au moins une clé de chiffrement associée à chacune de la au moins une section ;
la transmission (13), à l'agent DRM (101), d'un message de réponse d'objet de droits comprenant un élément de contexte
comprenant un identifiant du contenu et un élément d'informations de clé fournissant des informations en vue du déchiffrement du contenu,
ledit élément d'informations de clé comprenant un premier élément de clé de chiffrement comprenant des informations spécifiant
l'algorithme destiné à la génération de la au moins une clé de chiffrement, un élément d'informations de clé de chiffrement de droits comprenant des informations associées à la référence d'une clé de chiffrement de droits utilisée pour sécuriser une partie de l'objet de droits, la référence de la clé de chiffrement de droits comprenant des informations sur un emplacement fournissant des informations quant à un procédé permettant la récupération de la clé de chiffrement de droits, et un élément de données de chiffrement comprenant une valeur de départ chiffrée,
ladite valeur de départ chiffrée comprenant au moins l'une de la KSP, d'une valeur de départ d'authentification et des informations de type de valeur de départ indiquant si la valeur de départ chiffrée comprend la KSP ou comprend la KSP et la valeur de départ d'authentification,
ladite valeur de départ d'authentification étant utilisée pour authentifier l'agent DRM.

**2.** Procédé selon la revendication 1, ladite valeur de départ chiffrée étant comprise dans le premier élément de clé de chiffrement qui comprend la au moins une clé de chiffrement.

**3.** Procédé selon la revendication 1, ladite valeur de départ chiffrée étant formée dans une structure de données binaire, et
ladite valeur de départ chiffrée comprenant en outre des longueurs de référence de la KSP, une paire d'accès valide (AVP) et une clé de chiffrement de trafic (TEK) qui sont utilisées en tant que la au moins une clé de chiffrement, une référence de KSP, une référence d'AVP, une référence de TEK, un nombre de TEK, une longueur de la KSP et une longueur de la valeur de départ d'authentification.

**4.** Procédé selon la revendication 1, ladite valeur de départ chiffrée étant formée d'éléments de langage de balisage extensible (XML) et
ladite valeur de départ chiffrée comprenant en outre un élément d'identifiant de RI comprenant un identifiant du RI (102), un élément de droits comprenant des informations associées à un droit, un élément de signature comprenant des informations associées à une signature, un élément d'horodatage, un second élément de clé de chiffrement comprenant des informations associées à la au moins une clé de chiffrement, et un élément de données de configuration de multidiffusion comprenant des informations de configuration associées au chiffrement d'une multidiffusion.

**5.** Procédé selon la revendication 4, ledit élément de données de configuration de multidiffusion étant formé d'éléments XML, et
ledit élément de données de configuration de multidiffusion comprenant en outre une référence de KSP, une référence de paire d'accès valide (AVP), une référence de clé de chiffrement de trafic (TEK), un nombre de TEK, une longueur de la KSP et une longueur de la valeur de départ d'authentification.

**6.** Procédé permettant à un agent de gestion des droits numériques (DRM) (101) de gérer une clé de chiffrement fournie par un émetteur de droits (RI) (102) pour utiliser un contenu chiffré dans un service de radiodiffusion qui transmet le contenu à une pluralité d'agents DRM, le procédé comprenant :

la transmission (11), au RI (102), d'un message demandant un objet de droits pour recevoir le contenu, le contenu possédant au moins une section ;
la réception (13), en provenance du RI (102), d'un message de réponse comprenant un élément de contexte comprenant un identifiant du contenu et un élément d'informations de clé comprenant des informations de clé de chiffrement pour déchiffrer le contenu ;
la détermination de l'identifiant du contenu à partir de l'élément de contexte ;
la détermination, à partir de l'élément d'informations de clé,
d'un premier élément de clé de chiffrement comprenant des informations spécifiant un algorithme destiné à générer la clé de chiffrement,
un élément d'informations de clé de chiffrement de droits comprenant des informations associées à une référence d'une clé de chiffrement de droits utilisée pour sécuriser une partie de l'objet de droits, la référence de la clé de chiffrement de droits comprenant des informations sur un emplacement fournissant des informations sur un procédé permettant la récupération de la clé de chiffrement de droits, et un élément de données de chiffrement comprenant une valeur de départ chiffrée ;
ladite valeur de départ chiffrée comprenant au moins l'une de la KSP, d'une valeur de départ d'authentification et des informations de type de valeur de départ indiquant si la valeur de départ chiffrée comprend la KSP ou comprend la KSP et la valeur de départ d'authentification,
ladite valeur de départ d'authentification étant utilisée pour authentifier l'agent DRM, en déterminant, à partir de l'élément d'informations de clé, la KSP comprenant une première clé et une seconde clé, qui sont différentes l'une de l'autre ;
l'application des chaînes de hachage de directions différentes à la première clé et à la seconde clé, respectivement, pour déchiffrer au moins une clé de chiffrement associée à chacune de la au moins une section ; et
la détermination, à partir des informations de type de valeur de départ, pour savoir si la valeur de départ chiffrée comprend la KSP ou comprend la KSP et la valeur de départ d'authentification.

**7.** Procédé selon la revendication 6, comprenant en outre :
la détermination de la valeur de départ d'authentification associée à l'agent DRM (101) à partir de la valeur de départ chiffrée comprise dans l'élément de données de chiffrement.

**8.** Procédé selon la revendication 6, ladite détermination de la KSP comprenant : la détermination, à partir de la valeur de départ chiffrée, qui est formée dans une structure de données binaire,
des longueurs de référence de la KSP, d'une paire d'accès valide (AVP) et d'une clé de chiffrement de trafic (TEK), qui sont utilisées en tant que la au moins une clé de chiffrement, une référence de KSP, une référence AVP, une référence TEK, un nombre de TEK, une longueur de la KSP et une longueur de la valeur de départ d'authentification.

**9.** Procédé selon la revendication 6, la détermination de la KSP comprenant : la détermination, à partir de la valeur de départ chiffrée, qui est formée d'éléments de langage de balisage extensible (XML), un élément d'identifiant de RI comprenant un identifiant du RI (102), un élément de droits comprenant des informations associées à un droit, un élément de signature comprenant des informations associées à une signature, un élément d'horodatage, un second élément de clé de chiffrement comprenant des informations associées à la au moins une clé de chiffrement, et un élément de données de configuration de multidiffusion comprenant des informations de configuration associées au chiffrement d'une multidiffusion.

**10.** Procédé selon la revendication 9, ladite détermination de la KSP comprenant en outre : la détermination, à partir de l'élément de données de configuration de multidiffusion formé des éléments XML, d'une référence de KSP, d'une référence de paire d'accès valide (AVP), d'une référence de clé de chiffrement de trafic (TEK), d'un nombre de TEK, d'une longueur de la KSP et d'une longueur de la valeur de départ d'authentification.

FIG.1

FIG.2

```
<o-ex:asset>
  <o-ex:context>
   <o-dd:uid>ContentID</o-dd:uid>
  </o-ex:context>
  <ds:KeyInfo>
   <xenc:EncryptedKey>
    <xenc:EncryptionMethodAlgorithm="http://www.w3.org/2001/04/xmlenc#kw-aes128"/>
     <ds:KeyInfo>
       <ds:RetrievalMethod URI="REKReference"/>
     </ds:KeyInfo>
     <xenc:CipherData>
        <xenc:CipherValue>EncryptedSeeds</xenc:CipherValue>
     </xenc:CipherData>
    </xenc:EncryptedKey>
  </ds:KeyInfo>
</o-ex:asset>
```

# FIG.3

| Value | Length (bits) | Encoding |
|---|---|---|
| KSP Reference Length | 8 | uimsbf |
| AVP Reference Length | 8 | uimsbf |
| TEK Reference Length | 8 | uimsbf |
| Reserved Bits | 7 | uimsbf |
| KSP Reference | 8*KSP Reference Length | uimsbf |
| AVP Reference | 8*AVP Reference Length | uimsbf |
| Number of TEKs | 16 | uimsbf |
| Seed Type | 1 | uimsbf |
| TEK Reference | 8*TEK Reference Length | uimsbf |
| if ( Key Seed Type == 0 ) { | | |
| Key Seed Length | 8 | uimsbf |
| } | | |
| if ( Key Seed Type == 1 ) { | | |
| Key Seed Length | 8 | uimsbf |
| Salt Seed Length | 8 | uimsbf |
| } | | |

# FIG.4

```
<!-- Rights Object Definitions -->
<complexType name="ROPayload">
  <sequence>
    <element name="riID" type="roap:Identifier"/>
    <element name="rights" type="o-ex:rightsType"/>
    <element name="signature" type="ds:SignatureType" minOccurs="0"/>
    <element name="timeStamp" type="dateTime" minOccurs="0"/>
    <element name="encKey" type="xenc:EncryptedKeyType"/>
    <element ref="roap:roPayloadAliases" minOccurs="0"/>
    <element name="MulticastConfData" type="base64Binary" minOccurs="0">
    <any processContents="lax" minOccurs="0" maxOccurs="unbounded"/>
  </sequence>
  <attribute name="version" type="roap:Version" use="required" />
  <attribute name="id" type="ID" use="required" />
  <attribute name="stateful" type="boolean"/>
  <attribute name="domainRO" type="boolean"/>
  <attribute name="riURL" type="anyURI"/>
</complexType>
```

## FIG.5

| Element | <!ELEMENT xenc:EncryptedKey (xenc:EncryptionMethod, ds:KeyInfo?, xenc:CipherData, o-dd:MulticastConfData)> |
|---|---|
| Semantics | The <EncryptedKey> element contains the optional <KeyInfo> element, the <EncryptionMethod> element, and the <CipherData> element |

## FIG.6

| Element | <!ELEMENT o-dd:MulticastConfData (#PCDATA)> |
|---|---|
| Semantics | The <MulticastConfData> element contains the base64 encoded value of the multicast encryption configuration data (see above). |

## FIG.7

```
<element name="MulticastConfData">
  <complexType>
    <sequence>
      <element name="kspReference" type="base64Binary"/>
      <element name="avpReference" type="base64Binary"/>
      <element name="tekReference" type="base64Binary"/>
      <element name="numberTeks" type="base64Binary"/>
      <element name="seedType" type="boolean"/>
      <element name="encrSeedLength" type="base64Binary"/>
      <element name="authSeedLength" type="base64Binary" minOccurs="0">
    </sequence>
  </complexType>
</element>
```

## FIG.8

| Element | <!ELEMENT o-dd:MulticastConfData ()> |
|---|---|
| Semantics | The <MulticastConfData> element contains configuration data of the multicast encryption configuration data (see below attributes). |

## FIG.9

| Element | <!ATTLIST o-dd:Multicast oma-dd:numberTeks CDATA #REQUIRED> |
|---|---|
| Semantics | The numberTeks attribute contains a non-negative integer value. It specifies the number of TEKs to be generated from the provisioned seed values. |

## FIG.10

| Element | <!ELEMENT o-ex:asset (o-ex:context?, o-ex:inherit?, o-ex:digest?, ds:KeyInfo?, o-ex:MulticastConfData)> |
|---|---|
| Semantics | The <asset> element specifies the identity of the DRM Content governed by the containing <agreement> element via the <context> child element. The optional <inherit> element instructs the DRM Agent to apply the rights from the inherited Rights Object, specified in the <inherit> element context, to this asset. Note that the <KeyInfo> element SHOULD be omitted if the Rights Object functions as a parent Rights Object in the inheritance case. The optional <digest> element provides integrity protection for the reference to the DRM Content. The optional <KeyInfo> element provides the functionality to access the DRM content if granted the rights to do so. The optional <MulticastConfData> element provides functionality to access the multicast DRM content that is protected with the multicast key management mechanism specified in section 5.8.3. The <asset> element enables expression linking via its "id" and "idref" attributes. This enables reuse of Permissions defined for one asset, for other assets inside the same Rights Object. When the <asset> element is contained in a <permission> element, it MUST contain an "idref" attribute, and MUST be empty, i.e., all its optional child elements MUST be omitted. |

# FIG.11

| Element | <!ELEMENT o-ex:MulticastConfData (#PCDATA)> |
|---|---|
| Semantics | The <MulticastConfData> element contains the base64 encoded value The <MulticastConfData> element contains the base64 encoded value Encoding of this data is defined in section 7.4 of [DRM-v2.2]. |

# FIG.12

```
<complexType name="MulticastKeyGeneration">
  <complexContent>
    <extension base="roap:Extension"/>
    </extension>
  </complexContent>
</complexType>
```

# FIG.13

```
<complexType name="MulticastKeyGeneration">
  <complexContent>
    <extension base="roap:Extension"/>
      <element name="supportedHashAlgorithm" type="anyURI"/ minOccurs="0"
maxOccurs="unbounded">
    </extension>
  </complexContent>
</complexType>
```

# FIG.14

```
<complexType name="MulticastKeyGeneration">
  <complexContent>
    <extension base="roap:Extension"/>
      <element name="selectedHashAlgorithm" type="anyURI"/ minOccurs="0">
    </extension>
  </complexContent>
</complexType>
```

# FIG.15

FIG.16

FIG.17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20090128862 A

- US 2009252324 A1